# EUROPEAN PATENT SPECIFICATION

(11) **EP 3 452 660 B1**
(45) Date of publication and mention of the grant of the patent: **13.05.2020**
(21) Application number: 17728931.1
(22) Date of filing: 02.05.2017
(51) Int. Cl.: E01C 13/08

(54) **INFILL MATERIAL FOR ARTIFICIAL GRASS SURFACES AND ARTIFICIAL GRASS SURFACE STRUCTURE AND METHOD OF PRODUCING SUCH INFILL MATERIAL**
FÜLLMATERIAL FÜR KUNSTRASENFLÄCHEN, KUNSTRASENFLÄCHENSTRUKTUR UND VERFAHREN ZUR HERSTELLUNG DES FÜLLMATERIALS
MATÉRIAU DE REMPLISSAGE DE SURFACES D'HERBE ARTIFICIELLE, STRUCTURE DE SURFACE D'HERBE ARTIFICIELLE ET PROCÉDÉ DE FABRICATION D'UN TEL MATÉRIAU

(30) Priority: 05.05.2016 IT UA20163186
(43) Date of publication of application: 13.03.2019
(73) Proprietor: Polygreen SRL, 25015 Desenzano del Garda (IT)
(72) Inventor: BARALDI, Massimo, 25019 Sirmione (IT); DIAN, Roberto, 25019 Sirmione (IT); MARITANO, Riccardo, 25019 Sirmione (IT)
(74) Representative: Tirloni, Bartolomeo
(86) International application number: PCT/IB2017/052531
(87) International publication number: WO 2017/191550

(56) References cited:
- EP-A1- 2 206 833
- WO-A1-2008/125895
- WO-A1-2016/205087
- US-A1- 2011 081 506

## Description

The present invention relates to the sector of artificial grass surfaces, in particular for realising sports fields. In particular, the present invention relates to an infill material to be used for filling artificial grass surfaces, and the relative artificial grass surface structure.

Artificial grass surfaces are generally constituted by a mat formed of filaments of polymeric material, which simulate a grassy lawn, and one or more filling materials, in granular, dispersed in the mat.

Filling materials, as is known, use silica sand or prevalently elastic materials, such as natural rubber, synthetic or vulcanised rubber, for example originating from recycling of tyres, or materials of vegetable origin, such as tree fibre, coconut fibre, coco peat or cork, or materials having a thermoplastic origin, such as vinyl polymers, SBS, SEBS, polyurethane, polyethylene and the like.

Filling or infill materials are typically subdivided into two categories:
- stabilising infill, commonly silica sands, which serve to give stability to the mat, ballasting the surface; these infills are commonly spread as a first filling layer.
- performance infill, in general materials of polymeric or vegetable origin, which serve to give the mat excellent characteristics for sport, such as shock absorption, bounce, ball-rolling, comfort; these infills are commonly spread following the stabilising infill, in one or more superposed layers.

The granules formed by materials of thermoplastic origin are generally constituted by a polymeric matrix with additives of mineral loads, such as calcium carbonate or talcum, for reducing the quantity of polymer (and therefore the price), as well as for giving some technical characteristics.

The granules are typically realised by extrusion and cutting; the cutting is done following the output in fluid form of the material through an die, a shape of which determines the dimension and form of the granule.

The granules are all of an identical size and notwithstanding the existence of granules of different shapes in the sector (egg-shaped, bean-shaped, cylinder-shaped, star-shaped, hollow tube-shaped, three-lobed, etc), all the shapes have been demonstrated to have a poor performance in terms of volume.

Further, the various forms of the granules have demonstrated respective drawbacks: for example, the egg and cylinder shapes showed poor stability inside the mat (with consequent translations and movement of the infill during rainfall); the tube shapes demonstrated poor resistance to treading with consequent crushing and a change of dimension.

Granules are also known which are formed by a polymeric matrix in which, instead of mineral loads, loads of vegetable origin, as illustrated, for example in document WO 2008/053389 or document WO 92/19669, or EP 2206833 A1.

These granules too, however, have demonstrated some drawbacks, such as the poor availability of the raw material, or the difficulty of the production process, given the possibility of burning the vegetable component during the hot-extrusion.

There exists, therefore, a need for researching new granular infill materials, as the materials known today are not entirely satisfactory in terms of, for example, performance, volumetric performance, maintenance of moisture on the surface, costs, drainage capacity, degrading over time and environmental impact.

The aim of the present invention is to provide a granular infill material for artificial grass surfaces which satisfies the needs of the sector and obviates the drawbacks that have been mentioned with reference to the prior art.

The technical task is attained by a granular infill material in accordance with claim 1. The dependent claims relate to further embodiments of the invention.

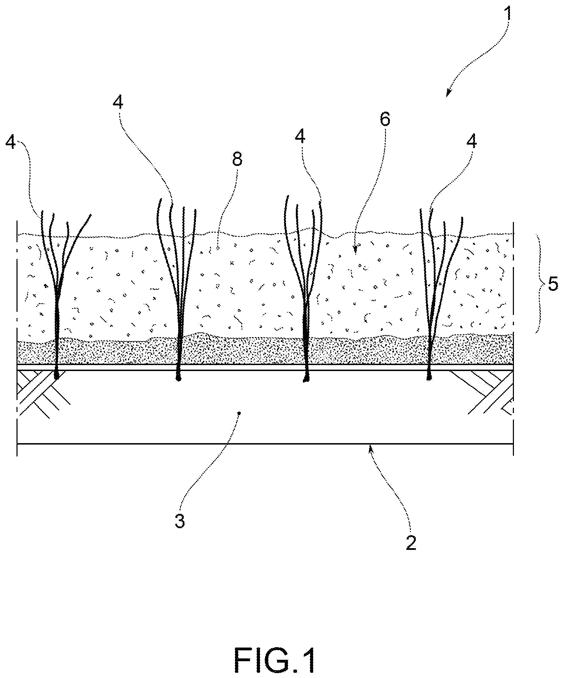

The characteristics and the advantages of the granular infill material according to present invention will emerge from the following description, given by way of non-limiting example, according to the appended table of drawings, in which figure 1 is a diagram of a grass surface with artificial grass containing a granular filling material according to the present invention.

With reference to figure 1, reference numeral 1 denotes in its entirety an artificial grass surface structure, in particular for sports fields.

The structure 1 comprises a mat 2 having a substrate 3 from which filaments 4 rise to simulate a grass surface.

The structure 1 further comprises a filling layer 5 formed by a granular infill material 6 arranged among the projecting filaments.

The granular material 6 is constituted by a mixture of granules 8, formed by a thermoplastic polymeric matrix and by a load dispersed in the matrix. The load includes at least a cellulose-based vegetable component. The vegetable load is preferably cellulose.

The cellulose is preferably present in a measure of between 20% - 40% in weight, minimum and maximum included, preferably between 20% - 30%, minimum and maximum included.

Said granules, according to the invention, originate from offcuts and waste of wallpaper. Wallpaper is in fact constituted by a paper support on which a polymeric material is spread.

Further, the thermoplastic polymeric material of the matrix is preferably selected from among a group comprising vinyl resins, for example polyvinyl chloride (PVC), polyurethane, polyester, polypropylene.

The granular material according to the invention has an appreciable granular porosity; the porosity enables obtaining a water absorption that is particularly appreciated; the water absorption is preferably comprised between 10% and 60%, and is preferably 30%.

The water absorption is measured using a dedicated measuring method, which includes:
- immersion in a water-filled container - of 1 kg of granular material (initially kept submerged, so that it is thoroughly soaked), for a predefined time, in general 10 minutes;
- collecting the soaked granular material from the container, dripping the material on a perforated grid (typically with holes of 1 mm diameter), for a predefined time, generally up to the end of the dripping and for a minimum of 20 minutes;
- weighing the soaked and dripped material;
- calculating the water absorption in percentage form from the ratio with the dry weight of the granular material.

The granular material described in the foregoing can be obtained by a working process of the type described in Italian patent n. 10 2015 0000 2085 5, appropriately modified.

In a preferred embodiment, the granular material and the artificial grass surface structure according to an embodiment of the present invention can be recycled.

The recycling method includes using, as performance infill, a granular material with a vegetable load based on cellulose, or cellulose, with added mineral loads and further vegetable components.

The method further includes a cutting step of the clump structure, ground and newly-re-forged, so as to newly obtain a material of an identical nature as that previously removed.

Said recycling method can be advantageously carried out *in situ.*

The granular material of the invention innovatively obviates the drawbacks of the prior art and meets the needs of the sector.

In fact, the granule of the invention generally has an irregular prismatic shape with a high apparent density, due to the vegetable component; this leads to excellent filling of the spaces, because of the shape of the granule, and a volumetric performance that is better than that of the traditional polymeric materials.

Further, the granule of the present invention has a high degree of porosity, able to retain rainwater, which restores freshness to the surface during dry days.

Further, the cost is advantageously very modest, as it originates from the recycling of wallpaper.

Further, and advantageously, by varying the quantity of cellulose present in the granule, it is possible to obtain infill material with various characteristics, for example more or less rigid, more or less hygroscopic or with a greater or lower apparent density.

## Claims

1. A granular infill material (6) for artificial grass surfaces, comprising a plurality of granules (8) comprising a thermoplastic polymeric matrix and a load dispersed in the matrix, wherein the load includes at least a cellulose-based vegetable component,
**characterized in that** the granules (8) originate from offcuts and waste of wallpaper.

2. The material according to claim 1, wherein the load is cellulose.

3. The material according to claim 1 or 2, wherein the thermoplastic polymeric matrix comprises at least a material selected from a group constituted by vinyl resins, for example polyvinyl chloride (PVC), polyurethane, polyester, polypropylene.

4. The material according to any one of the preceding claims, wherein the granule (8) has a high degree of porosity with a water absorption of between 10% and 60%, preferably 30%.

5. The material according to any one of the preceding claims, wherein the granule (8) further has mineral loads or further vegetable components added.

6. The material according to any one of the preceding claims, wherein the cellulose is present in a measure of between 20% - 40% in weight, minimum and maximum included.

7. The material according to the preceding claim, wherein the cellulose is present in a measure of between 20% - 30% in weight, minimum and maximum included.

8. An artificial grass surface structure (1), in particular for sports fields, comprising a mat (2) with filaments (4) which simulate a grass surface, and at least a filling layer (5) comprising a granular infill material (6) according to any one of the preceding claims, arranged between the filaments (4).

9. An artificial grass surface structure (1), in particular for sports fields, comprising a mat (2) with filaments (4) simulating a grass surface, at least a filling layer for stabilising positioned inferiorly and at least a performance filling layer (5) arranged superiorly and comprising a granular infill material (6) according to anyone of claims from 1 to 7, arranged between the filaments (4).

10. Method for producing a granular infill material (6) according to anyone of claims from 1 to 7, the method comprising providing offcuts and waste of wallpaper.

## Patentansprüche

1. Körniges Füllmaterial (6) für Kunstrasenflächen, umfassend eine Vielzahl an Körnern (8), umfassend eine thermoplastische Polymermatrix und eine in der Matrix dispergierte Ladung, wobei die Ladung mindestens eine pflanzliche Komponente auf Cellulosebasis enthält,
**dadurch gekennzeichnet, dass** die Körner (8) aus Verschnitt und Tapetenabfällen stammen.

2. Material nach Anspruch 1, wobei die Ladung Cellulose ist.

3. Material nach Anspruch 1 oder 2, wobei die thermoplastische Polymermatrix mindestens ein Material umfasst, das aus einer Gruppe ausgewählt ist, die aus Vinylharzen, beispielsweise Polyvinylchlorid (PVC), Polyurethan, Polyester, Polypropylen besteht.

4. Material nach einem der vorhergehenden Ansprüche, wobei der Korn (8) einen hohen Porositätsgrad mit einer Wasserabsorption zwischen 10% und 60%, vorzugsweise 30% aufweist.

5. Material nach einem der vorhergehenden Ansprüche, wobei dem Korn (8) zudem Mineralladungen oder weitere pflanzliche Komponenten zugesetzt sind.

6. Material nach einem der vorhergehenden Ansprüche, wobei die Cellulose in einem Maß zwischen 20-40 Gew.-%, einschließlich Minimum und Maximum, vorhanden ist.

7. Material nach dem vorhergehenden Anspruch, wobei die Cellulose in einem Maß zwischen 20-30 Gew.-%, einschließlich Minimum und Maximum, vorhanden ist.

8. Kunstrasenflächenstruktur (1), insbesondere für Sportplätze, umfassend eine Matte (2) mit Filamenten (4), die eine Rasenfläche simulieren, und mindestens eine Füllschicht (5), die ein körniges Füllmaterial (6) nach einem der vorhergehenden Ansprüche, angeordnet zwischen den Filamenten (4), umfasst.

9. Kunstrasenflächenstruktur (1), insbesondere für Sportplätze, umfassend eine Matte (2) mit Filamenten (4), die eine Rasenfläche simulieren, mindestens eine Füllschicht zur Stabilisierung, die unterlegen positioniert ist, und mindestens eine Leistungsfüllschicht (5), die überlegen angeordnet ist und umfassend ein körniges Füllmaterial (6) nach einem der Ansprüche 1 bis 7, angeordnet zwischen den Filamenten (4).

10. Verfahren zur Herstellung eines körnigen Füllmaterials (6) nach einem der Ansprüche 1 bis 7, wobei das Verfahren das Bereitstellen von Verschnitt und Tapetenabfällen umfasst.

## Revendications

1. Matériau de remplissage (6) granulaire de surfaces de gazon artificiel, comprenant une pluralité de granulés (8) comprenant une matrice polymère thermoplastique et une charge dispersée dans la matrice, dans lequel la charge inclut au moins un composant végétal à base de cellulose,
**caractérisé en ce que** les granulés (8) proviennent de chutes et de déchets de papier peint.

2. Matériau selon la revendication 1, dans lequel la charge est de la cellulose.

3. Matériau selon la revendication 1 ou 2, dans lequel la matrice polymère thermoplastique comprend au moins un matériau choisi dans un groupe constitué par les résines vinyliques, par exemple le polychlorure de vinyle (PVC), le polyuréthane, le polyester, le polypropylène.

4. Matériau selon l'une quelconque des revendications précédentes, dans lequel le granulé (8) présente un degré élevé de porosité avec une absorption d'eau comprise entre 10 et 60 %, de préférence 30 %.

5. Matériau selon l'une quelconque des revendications précédentes, dans lequel le granulé (8) comporte de plus des charges de minéraux ou d'autres composants végétaux ajoutés.

6. Matériau selon l'une quelconque des revendications précédentes, dans lequel la cellulose est présente dans une proportion comprise entre 20 et 40 % en poids, les pourcentages minimum et maximum étant inclus.

7. Matériau selon la revendication précédente, dans lequel la cellulose est présente dans une proportion comprise entre 20 et 30 % en poids, les pourcentages minimum et maximum étant inclus.

8. Structure (1) de surface de gazon artificiel, en particulier pour des terrains de sport, comprenant un tapis (2) avec des filaments (4) imitant une surface de gazon, et au moins une couche de remplissage (5) comprenant un matériau de remplissage granulaire (6), selon l'une quelconque des revendications précédentes, disposé entre les filaments (4).

9. Structure (1) de surface de gazon artificiel, en particulier pour des terrains de sport, comprenant un tapis (2) avec des filaments (4) imitant une surface de gazon, au moins une couche de remplissage de stabilisation positionnée en dessous et au moins une couche de remplissage (5) haute performance disposée au-dessus et comprenant un matériau de remplissage granulaire (6), selon l'une quelconque des revendications de 1 à 7, disposé entre les filaments (4).

10. Procédé de fabrication d'un matériau de remplissage granulaire (6) selon l'une quelconque des revendications 1 à 7, le procédé comprenant la fourniture de chutes et de déchets de papier peint.
